# EUROPÄISCHE PATENTANMELDUNG

(11) **EP 2 803 441 A1**
(43) Veröffentlichungstag der Anmeldung: **19.11.2014**
(21) Anmeldenummer: 13167461.6
(22) Anmeldetag: 13.05.2013
(51) Int. Cl.: B23K 26/06, B23K 26/28

(54) **Verfahren zum Laserstrahl-Schweißen**

(71) Anmelder: Siemens Aktiengesellschaft, 80333 München (DE)
(72) Erfinder: Burbaum, Bernd, 14612 Falkensee (DE); Melzer-Jokisch, Torsten, 15366 Neuenhagen bei Berlin (DE)

(57) **Zusammenfassung**

Es wird ein Verfahren zum Laserstrahl-Schweißen zur Verbindung von mindestens zwei Komponenten (2, 3), beispielsweise Brennerkomponenten, entlang einer Fügezone (4) beschrieben. Dabei wird der Laserschweißprozess außerhalb der Fügezone (4) im Vollwerkstoff einer der Komponenten (2) gestartet wird und anschließend in die Fügezone (4) hineingefahren wird.

## Beschreibung

Die vorliegende Erfindung betrifft ein Verfahren zum Laserstrahl-Schweißen zur Verbindung von mindestens zwei Komponenten entlang einer Fügezone. Sie betrifft insbesondere ein Verfahren, bei dem zwei Komponenten, die Teil einer Kavität sind, miteinander verbunden werden.

Beim Laserstrahlschweißen von Brennerkomponenten mit Hohlräumen bzw. Kavitäten, durch die flüssiger und/oder gasförmiger Brennstoff geführt wird, dürfen durch den Schweißprozess keine kerbebehafteten Wurzeldurchhänge nach dem Schweißen verbleiben. Solche Wurzeldurchhänge können beispielsweise entstehen, wenn ein Deckel auf eine Kavität geschweißt wird. An diesen Wurzeldurchhängen können durch den Brennstoff Korrosionsvorgänge gestartet startet werden, die zum Versagen der Brennerkomponente führen könnten. Speziell beim den Ein-und Ausschaltvorgängen der Laserstrahlung zum Starten bzw. Beenden des Schweißprozesses bilden sich kritische Wurzeldurchhänge am Spalt bzw. im Bereich der sogenannten Fügezone. Durch den Nullspalt fließt die Schmelze und es bildet sich ein Schmelztopfen an der Unterseite der Schweißnaht.

Bisher werden die Brennerkomponenten manuell mittels Wolfram-Intertgasschweißen (WIG-Schweißverfahren) geschweißt. Der Übergang zum Laserstrahl-Schweißen im Brennerbau befindet sich gerade in der Entwicklung. Das Laserstrahl-Schweißen hat im Vergleich zum manuellen WIG-Prozess folgende Vorteile: Die Prozesszeiten können verkürzt werden. Eine Nacharbeit der Schweißnaht kann vermeiden werden. Zudem wird ein Schweißen ohne Zusatzwerkstoff ermöglicht.

Es ist daher die Aufgabe der vorliegenden Erfindung, ein vorteilhaftes Verfahren zum Laserstrahl-Schweißen zur Verbindung von mindestens zwei Komponenten entlang einer Fügezone zur Verfügung zu stellen, bei welchem insbesondere Wurzeldurchhänge reduziert oder vermieden werden.

Diese Aufgabe wird durch ein Verfahren nach Anspruch 1 gelöst. Die abhängigen Ansprüche enthalten weitere, vorteilhafte Ausgestaltungen der Erfindung.

Das erfindungsgemäße Verfahren zum Laserstrahl-Schweißen zur Verbindung von mindestens zwei Komponenten entlang einer Fügezone zeichnet sich dadurch aus, dass der Laserschweißprozess außerhalb der Fügezone im Vollwerkstoff einer der Komponenten gestartet wird und anschließend in die Fügezone hineingefahren wird. Auf diese Weise wird die Bildung eines Wurzeldurchhanges durch den Einschaltvorgang der Laserstrahlung zum Starten des Schweißprozesses reduziert oder vollständig vermieden.

Vorzugsweise werden zwei Komponenten verbunden, wobei eine erste Komponente der zwei Komponenten eine Oberfläche umfasst, die zumindest teilweise die innere Oberfläche eines Hohlraums bildet, und eine zweite Komponente der zwei Komponenten eine Oberfläche umfasst, die nach der Verbindung der ersten mit der zweiten Komponente einen Bereich der inneren Oberfläche des Hohlraums bildet. Dabei kann es sich beispielsweise um eine Brennerkomponente mit einer Kavität und einen Deckel, der auf die Kavität geschweißt wird, handeln. Bei dem Brenner kann es sich um einen Brenner für eine Gasturbine handeln.

Die Laserleistung kann vorteilhafterweise vor dem Erreichen der Fügezone, insbesondere beim bzw. vor dem Hineinfahren in die Fügezone, vergrößert bzw. erhöht werden, sodass die Solllaserleistung beim Erreichen der Fügezone erreicht wird. Dabei kann die Laserleistung vorzugsweise linear vergrößert bzw. erhöht werden.

Weiterhin kann der Schweißprozess beim Erreichen der Fügezone von einem Laserstrahl-Umschmelzen in ein Lasertiefschweißen durch eine Anpassung der Laserleistung überführt werden.

Darüber hinaus kann vor Beginn des Schweißprozesses der Hohlraum zumindest teilweise, vorzugsweise vollständig, mit einem Keramikpulver und/oder einem Formiergas gefüllt werden. Das Formiergas verhindert den Durchhang der Schweißnaht. Durch das Keramikpulver wird die durchstrahlende Laserstrahlung absorbiert und damit wird die Rückwand geschützt. Das verwendete Formiergas kann Argon (Ar) und Kohlendioxid (CO₂), vorteilhafterweise 18% Kohlendioxid, umfassen.

Am Ende der Fügezone kann der Schweißprozess aus der Fügezone heraus in den Vollwerkstoff hineingefahren werden. Dabei kann die Laserleistung verkleinert bzw. verringert, beispielsweise linear verkleinert bzw. verringert, werden. Weiterhin kann der Schweißprozess beim Verlassen der Fügezone von einem Lasertiefschweißen in ein Laserstrahl-Umschmelzen durch eine Anpassung der Laserleistung überführt werden.

Grundsätzlich kann es sich bei den Komponenten um Komponenten eines Brenners einer Gasturbine handeln. Zudem kann es sich bei einer der Komponenten um einen Deckel handeln, der auf einen durch die andere Komponente gebildeten Hohlraum bzw. Kavität geschweißt wird.

Die während des Laserschweißprozesses abzufahrende Fügezone kann eine geschlossene Kurve bilden. Der Laserschweißprozess kann in diesem Fall an einem Punkt A in die Fügezone hineingefahren werden. Der Laserschweißprozess kann anschließend entlang der geschlossenen Kurve bzw. entlang der Fügezone fortgesetzt werden, wobei der Punkt A wieder erreicht wird. Beim Wiedererreichen des Punktes A kann die Laserleistung so angepasst werden, dass die Fügezone erneut durchschweißt wird. Dies bewirkt, dass keine Porosität in der Wurzel verbleibt.

Nach dem Wiedererreichen des Punktes A kann der Schweißprozess vorzugsweise an einem Punkt B der Fügezone aus der Fügezone heraus in den Vollwerkstoff hineingefahren werden. Dabei kann die Laserleistung verkleinert bzw. verringert, beispielsweise linear verkleinert bzw. verringert, werden. Vorteilhafterweise liegt Punkt B in Richtung des Abfahrens der Fügezone bzw. in Richtung des Prozessverlaufs entlang der Fügezone hinter Punkt A und wird erst nach dem Wiedererreichen des Punktes A ebenfalls wiedererreicht. Dadurch wird auch ein möglicher Wurzeldurchhang bei den Ausschaltvorgängen der Laserstrahlung zum Beenden des Schweißprozesses verringert oder vermieden.

Vorteilhafterweise kann der Schweißprozess tangential aus dem Vollwerkstoff in die Fügezone hineingefahren werden und/oder der Schweißprozess kann tangential aus der Fügezone in den Vollwerkstoff herausgefahren werden. Dies bietet sich beispielsweise an, wenn die Fügezone eine geschlossene Kurve, insbesondere einen Kreis, bildet.

Die vorliegende Erfindung hat den Vorteil, dass sie die Verwendung des Laserstrahlschweißens bei Brennerkomponenten mit Kavitäten bzw. Hohlräumen ermöglicht, da kritische Wurzeldurchhänge vermieden werden.

Weitere Merkmale, Eigenschaften und Vorteile der vorliegenden Erfindung werden im Folgenden anhand eines Ausführungsbeispiels unter Bezugnahme auf die beigefügte Figur näher beschrieben. Alle bisher und im Folgenden beschriebenen Merkmale sind dabei sowohl einzeln als auch in einer beliebigen Kombination miteinander vorteilhaft. Das im Folgenden beschriebene Ausführungsbeispiel stellt lediglich ein Beispiel dar, welches den Gegenstand der Erfindung jedoch nicht beschränkt.

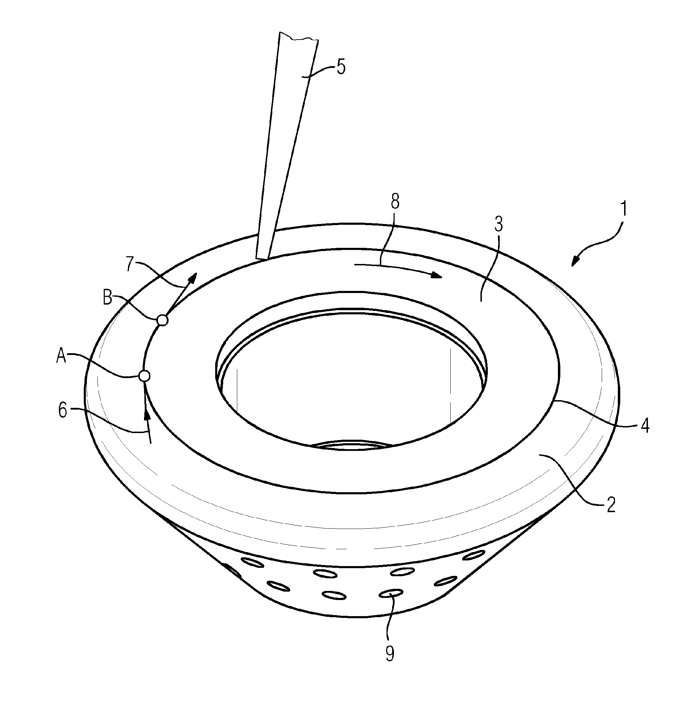

- Figur 1: zeigt schematisch ein Brennerbauteil in einer perspektivischen Ansicht.

Die Figur 1 zeigt schematisch ein Brennerbauteil 1 in einer perspektivischen Ansicht. Das Brennerbauteil 1, bei dem es sich um ein Brennerbauteil einer Gasturbine handeln kann, umfasst eine Komponente 2 mit einer Kavität und einen Deckel 3, der auf die Kavität geschweißt wird. Die Kavität ist in der Figur 1 nicht unmittelbar sichtbar. Die Komponente 2 umfasst jedoch Öffnungen 9, die in die im Inneren der Komponente 2 befindliche Kavität führen.

Die Fügezone zwischen der Komponente 2 und dem Deckel 3 ist mit der Bezugsziffer 4 gekennzeichnet. Die Fügezone hat die Form eines Kreises. Der Laserstrahl, mit dem die Fügezone während des Laserstrahlschweißen zum Verbinden der Komponente 2 mit dem Deckel 3 abgefahren wird, ist schematisch gezeigt und mit der Bezugsziffer 5 gekennzeichnet.

Im Rahmen des vorliegenden Ausführungsbeispiels des erfindungsgemäßen Verfahrens wird die Kavität bzw. der innere Raum oder Hohlraum, der von der Komponente 2 und dem Deckel 3 gebildet wird, mit einem Keramikpulver und einem Formiergas, welches vorzugsweise Argon (Ar) und 18% Kohlendioxid (CO₂) umfasst, gefüllt. Das Formiergas verhindert den Durchhang der Schweißnaht. Durch das Keramikpulver wird die durchstrahlende Laserstrahlung absorbiert und damit wird die Rückwand geschützt.

Der Laserschweißprozess wird außerhalb der Fügezone 4 im Vollwerkstoff gestartet und im Punkt A tangential in die Fügezone 4 zwischen dem Deckel 3 und der Komponente 2 mit Kavität hinein gefahren. Dies ist durch einen Pfeil 6 gekennzeichnet. Die Laserleistung wird dabei linear vergrößert, so dass die Solllaserleistung im Punkt A erreicht wird. Eventuell wird der Schweißprozess von einem Laserstrahl-Umschmelzen in einen Tiefschweißprozess durch eine Anpassung der Laserleistung überführt.

Anschließend werden die Bauteile 2 und 3 im vollen Umfang geschweißt, d.h. die Laserstrahlung wird einmal um 360° rotationssymmetrisch entlang der Fügezone 4 verfahren. Die Prozessrichtung ist durch einen Pfeil 8 gekennzeichnet. Wird der Punkt A wieder erreicht ist eine Anpassung, vorzugsweise eine Erhöhung bzw. Vergrößerung, der Laserleistung notwendig, so dass keine Porosität in der Wurzel verbleibt und das Blech erneut durchschweißt wird.

Am Punkt B wird die Schweißnaht tangential ausgefahren, also von der Fügezone in den Vollwerkstoff geleitet. Dies ist durch einen Pfeil 7 gekennzeichnet. Dabei wird die Laserleistung linear verkleinert. Eventuell wird die Laserleistung so angepasst, dass der Prozess vom Tiefschweißen in das Laserstrahl-Umschmelzen überführt wird.

Das erfindungsgemäße Verfahren eignet sich besonders zum Schweißen von Kavitäten mit Deckel. Es ermöglicht eine Verkleinerung der Prozessfenster, insbesondere indem es die Anwendung des Laserstrahl-Schweißen unter gleichzeitiger Vermeidung von Wurzeldurchhängen ermöglicht.

## Patentansprüche

1. Verfahren zum Laserstrahl-Schweißen zur Verbindung von mindestens zwei Komponenten (2, 3) entlang einer Fügezone (4),
**dadurch gekennzeichnet, dass**
der Laserschweißprozess außerhalb der Fügezone (4) im Vollwerkstoff einer der Komponenten (2) gestartet wird und anschließend in die Fügezone (4) hineingefahren wird.

2. Verfahren nach Anspruch 1,
**dadurch gekennzeichnet, dass**
zwei Komponenten (2, 3) verbunden werden, wobei eine erste Komponente (2) der zwei Komponenten eine Oberfläche umfasst, die zumindest teilweise die innere Oberfläche eines Hohlraums bildet, und eine zweite Komponente (3) der zwei Komponenten eine Oberfläche umfasst, die nach der Verbindung der ersten mit der zweiten Komponente einen Bereich der inneren Oberfläche des Hohlraums bildet.

3. Verfahren nach Anspruch 1 oder Anspruch 2,
**dadurch gekennzeichnet, dass**
die Laserleistung vor dem Erreichen der Fügezone (4) vergrößert wird, sodass die Solllaserleistung beim Erreichen der Fügezone (4) erreicht wird.

4. Verfahren nach einem der Ansprüche 1 bis 3,
**dadurch gekennzeichnet, dass**
der Schweißprozess beim Erreichen der Fügezone (4) von einem Laserstrahl-Umschmelzen in ein Lasertiefschweißen durch eine Anpassung der Laserleistung überführt wird.

5. Verfahren nach einem der Ansprüche 1 bis 4,
**dadurch gekennzeichnet, dass**
vor Beginn des Schweißprozesses der Hohlraum zumindest teilweise mit einem Keramikpulver und/oder einem Formiergas gefüllt wird.

6. Verfahren nach Anspruch 5,
**dadurch gekennzeichnet, dass**
das Formiergas Argon und Kohlendioxid umfasst.

7. Verfahren nach einem der Ansprüche 1 bis 6,
**dadurch gekennzeichnet, dass**
am Ende der Fügezone (4) der Schweißprozess aus der Fügezone (4) heraus in den Vollwerkstoff hineingefahren wird.

8. Verfahren nach Anspruch 7,
**dadurch gekennzeichnet, dass**
der Schweißprozess beim Verlassen der Fügezone (4) von einem Lasertiefschweißen in ein Laserstrahl-Umschmelzen durch eine Anpassung der Laserleistung überführt wird.

9. Verfahren nach einem der Ansprüche 1 bis 8,
**dadurch gekennzeichnet, dass**
es sich bei den Komponenten (2, 3) um Komponenten eines Brenners einer Gasturbine handelt.

10. Verfahren nach einem der Ansprüche 1 bis 9,
**dadurch gekennzeichnet, dass**
es sich bei einer der Komponenten um einen Deckel (3) handelt, der auf einen durch die andere Komponente (2) gebildeten Hohlraum geschweißt wird.

11. Verfahren nach einem der Ansprüche 1 bis 10,
**dadurch gekennzeichnet, dass**
die während des Laserschweißprozesses abzufahrende Fügezone (4) eine geschlossene Kurve bildet, der Laserschweißprozess an einem Punkt A in die Fügezone (4) hineingefahren wird, der Laserschweißprozess entlang der geschlossenen Kurve fortgesetzt wird, wobei der Punkt A wieder erreicht wird und die Laserleistung beim Wiedererreichen des Punktes A so angepasst wird, dass die Fügezone (4) erneut durchschweißt wird.

12. Verfahren nach Anspruch 11,
**dadurch gekennzeichnet, dass**
nach dem Wiedererreichen des Punktes A der Schweißprozess an einem Punkt B der Fügezone (4) aus der Fügezone heraus in den Vollwerkstoff hineingefahren wird.

13. Verfahren nach einem der Ansprüche 1 bis 12,
**dadurch gekennzeichnet, dass**
der Schweißprozess tangential (6) aus dem Vollwerkstoff in die Fügezone (4) hineingefahren wird und/oder der Schweißprozess tangential (7) aus der Fügezone (4) in den Vollwerkstoff herausgefahren wird.
